# EUROPEAN PATENT APPLICATION

(11) **EP 4 757 335 A1**
(43) Date of publication of application: **10.06.2026**
(21) Application number: 24920719.2
(22) Date of filing: 25.12.2024
(51) Int. Cl.: H04N 23/957

(54) **OPTICAL IMAGING DEVICE AND OPTICAL IMAGING METHOD**

(30) Priority: 27.09.2024 CN 202411363236
(71) Applicant: Suzhou ZWO Co., Ltd., Suzhou, Jiangsu 215000 (CN)
(72) Inventor: PU, Jianlong, Suzhou, Jiangsu 215000 (CN); WEN, Jia, Suzhou, Jiangsu 215000 (CN)
(74) Representative: Luppi Intellectual Property S.r.l.
(86) International application number: PCT/CN2024/142188
(87) International publication number: WO 2026/065799

(57) **Abstract**

Provided are an optical imaging device and an optical imaging method, related to the art of optical imaging. The device includes: a first optical path assembly, a second optical path assembly and a transmission structure. The first optical path assembly is fixedly connected to the transmission structure and is configured to move under the driven of the transmission structure. The second optical path assembly is arranged inside the transmission structure and is configured to move under driven of the transmission structure. The first optical path assembly and the second optical path assembly are in optical path connection with each other. A first optical transmission path of the first optical path assembly and a second optical transmission path of the second optical path assembly form an angle. During the movement of the transmission structure, the second optical path assembly remains stationary relative to the first optical path assembly. In the present disclosure, the straight-line optical path structure is disassembled into the folded optical path structure, which effectively utilizes the space inside the transmission structure, and reduces the volume occupied by the optical path assemblies, thereby reducing the overall device volume, size and weight of the optical imaging device, and meeting various requirements for miniaturization.

## Description

The present application claims priority to Chinese Application No. 202411363236.1, filed on September 27, 2024, the content of which is incorporated herein by reference in its entirety.

### TECHNICAL FIELD

The present disclosure relates to the technical field of optical imaging, and in particular, to an optical imaging device and an optical imaging method.

### BACKGROUND

The lens barrel is a common component in various optical devices and image acquisition devices, which may be a special designed cylindrical structure for fixing the lens of the lens optical assembly and forming a corresponding optical path for imaging or image acquisition. Depending on the application field, the lens barrel may be classified into various types, such as photographic lens barrel and microscope lens barrel.

In the field of photography, the length of the lens barrel varies depending on the focal length of the lens. The distance for adjusting the focal length during focusing is related to the length of the optical path inside the lens barrel. That is, it is generally believed that the length of the lens barrel is related to the focal length and the image quality at a certain focal length. At present, the lens barrel is usually designed as a straight barrel, and the optical path passes through the lens and reaches the image sensor along a straight line for image acquisition. Since the imaging quality needs to be taken into account, the overall length of the lens barrel is relatively long, and the size of the entire lens barrel is relatively large, such that the physical dimension of the device including the lens barrel is too large to meet the user's requirement for miniaturization of the device.

### SUMMARY

In view of the above, the purpose of embodiments of the present disclosure is to provide an optical imaging device and an optical imaging method to address the problem of large physical dimensions of the optical equipment in the prior art.

In order to solve the above problem, in a first aspect, an embodiment of the present disclosure provides an optical imaging device. The device includes: a first optical path assembly, a second optical path assembly and a transmission structure.

The first optical path assembly is fixedly connected to the transmission structure and is configured to move under the driven of the transmission structure.

The second optical path assembly is arranged inside the transmission structure and is configured to move under the driven of the transmission structure.

In an embodiment, the first optical path assembly and the second optical path assembly are in optical path communication with each other. A first optical transmission path of the first optical path assembly and a second optical transmission path of the second optical path assembly form an angle.

The second optical path assembly remains stationary relative to the first optical path assembly during the movement of the transmission structure.

In the above implementation process, the first optical path assembly is connected to the transmission structure, the second optical path assembly is arranged inside the transmission structure, and the light transmission paths of the two connected optical path assemblies are arranged to form an angle, so as to disassemble the straight-line optical path structure into a folded optical path structure and realize the disassembly of the optical path assembly for light transmission, thereby reducing the volume occupied by the straight-line optical path structure and the installation difficulty. Moreover, a part of the optical path structure is arranged inside the transmission structure, such that the space inside the transmission structure is effectively utilized, the volume occupied by the optical path assemblies is reduced, thereby reducing the overall device volume, size and weight of the optical imaging device, and meeting various requirements for miniaturization of the device. In addition, in some embodiments of the present disclosure, the two optical path assemblies arranged outside and inside the transmission structure are both configured to move under the driven of the transmission structure. Due to the structural characteristics of the two optical path assemblies and the transmission structure, the second optical path assembly can remain stationary relative to the first optical path assembly when moving under the drive of the transmission structure. That is, the first optical path assembly and the second optical path assembly can move synchronously during the movement, such that the relative static relationship between the optical path assemblies and the image/imaging sensor is not affected during the movement, and the optical imaging device can achieve stable optical imaging function during the movement.

In some embodiments of the present disclosure, the transmission structure includes: a horizontal transmission structure and an elevation transmission structure.

The horizontal transmission structure is connected to the elevation transmission structure.

The first optical path assembly is fixed on a connection area of the elevation transmission structure, and the second optical path assembly is arranged in a hollow cavity corresponding to the connection area inside the elevation transmission structure.

The horizontal transmission structure is configured to drive the first optical path assembly and the second optical path assembly to move in a horizontal axial direction parallel to an installation plane of the optical imaging device.

The elevation transmission structure is configured to drive the first optical path assembly and the second optical path assembly to move in an elevation axial direction which changes in angle relative to the installation plane.

In the above implementation process, in order to achieve the automatic tracking and shooting functions of the target, the transmission structure may be provided with the corresponding horizontal transmission structure and elevation transmission structure to control the synchronous movement of the first optical path assembly and the second optical path assembly in both horizontal and elevation axial directions. In order to achieve the synchronous movement of the two optical path assemblies, the first optical path assembly is connected to the connection area of the elevation transmission structure, and the second optical path assembly is arranged in the hollow cavity corresponding to the connection area inside the elevation transmission structure, which can achieve the connection between the two optical path assemblies, effectively utilize the space in the elevation transmission structure, and reduce the space volume occupied by the optical path assemblies, thereby reducing the overall device volume, size and weight of the optical imaging device, and meeting various requirements for miniaturization of the device. As such, the movement control in both horizontal and elevation axial directions can be achieved, which effectively improves the efficiency and accuracy of automatic target tracking by the optical imaging device.

In some embodiments of the present disclosure, an inner wall of a housing of the elevation transmission structure encloses to form the hollow cavity, and the hollow cavity is configured to transmit the light refracted by the first optical path assembly to accommodate the second light transmission path of the second optical path assembly.

The second optical path assembly includes: an image sensor.

The image sensor is arranged at an end of the hollow cavity away from the connection area.

The image sensor is configured to receive the light and perform imaging processing to obtain a target image.

In the above implementation process, since the second optical path assembly is arranged inside the transmission structure, the inner wall of the housing of the elevation transmission structure can enclose to form the hollow cavity for transmitting the light refracted by the first optical path assembly to accommodate the second light transmission path. The image sensor of the second optical path assembly is arranged at the end of the hollow cavity away from the connection area to achieve an optical path design with a relatively long distance through the hollow cavity, which is suitable for various shooting targets and application scenarios.

In some embodiments of the present disclosure, the second optical path assembly further includes: a sensor focusing assembly.

The sensor focusing assembly is arranged at an end of the image sensor away from the first optical path assembly.

The sensor focusing assembly is configured to adjust a position of the image sensor in the second light transmission path.

In the above implementation process, during the image acquisition, the corresponding focal length position in the optical path structure varies depending on the various targets. Therefore, in order to achieve a real-time focusing function, the corresponding sensor focusing assembly may be provided at the end of the image sensor away from the first optical path assembly, i.e., the end that does not affect the normal transmission of light, so as to adjust the position of the image sensor in the second optical transmission path, thereby adjusting the image sensor to a suitable focusing position in the second optical transmission path for light receiving and imaging processing, which effectively improves the imaging quality and renders it suitable for various image acquisition scenarios.

In some embodiments of the present disclosure, the elevation transmission structure includes: a driving mechanism and a driving member.

The driving mechanism is connected to the driving member.

The driving mechanism is configured to provide a driving force in the elevation axial direction to the driving member.

The driving member is configured to drive the first optical path assembly and the second optical path assembly to move in the elevation axial direction based on the driving force.

The driving member includes a first hollow structure.

An inner wall of a housing of the first hollow structure encloses to form a partial hollow cavity.

In the above implementation process, the corresponding driving mechanism and the driving member may be provided in the elevation transmission structure to control the first optical path assembly and the second optical path assembly to move in the elevation axial direction. The driving mechanism is connected to the driving member, and the driving member is connected to the second optical path assembly, such that the driving mechanism provides the driving force for the driving member to move in the elevation axial direction, and the driving member moves based on the driving force, and drives the second optical path assembly inside the elevation transmission structure and the first optical path assembly connected to the elevation transmission structure to move synchronously. Accordingly, the movement of the first optical path assembly and the second optical path assembly in the elevation axial direction can be accurately and effectively controlled, and the accuracy of the height control of the first optical path assembly and the second optical path assembly is effectively improved, thereby improving the effectiveness of the optical imaging device in automatic target tracking. Furthermore, in order to form the corresponding hollow cavity inside the elevation transmission structure to accommodate the second optical path assembly, the driving member may include a first hollow structure, such that the inner wall of the housing of the first hollow structure encloses to form the partial hollow cavity to provide sufficient hollow space for the hollow cavity, and thus the second optical path assembly can be arranged inside the elevation transmission structure without obstructing the light transmission and light receiving processing inside the elevation transmission structure, thereby achieving effective imaging processing.

In some embodiments of the present disclosure, the elevation transmission structure further includes: an elevation central shaft.

The driving member is connected to the elevation central shaft, and the driving member drives the first optical path assembly and the second optical path assembly to move along an axial rotation direction of the elevation central shaft.

The elevation central shaft and the first optical path assembly are connected to each other via a cavity center shaft.

The elevation central shaft is connected to the cavity center shaft, and the elevation central shaft and the cavity center shaft are coaxial.

In the above implementation process, the elevation transmission structure is provided with the corresponding elevation central shaft, so that the driving member drives the first optical path assembly and the second optical path assembly to move synchronously along the axial rotation direction of the elevation central shaft during the movement control process in the elevation axial direction. In addition, in order to drive the first optical path assembly connected to the elevation transmission structure to move synchronously, the cavity center shaft can be provided between the first optical path assembly and the elevation central shaft, such that the first optical path assembly and the elevation central shaft are connected to each other via the cavity center shaft. The elevation central shaft and the cavity center shaft are arranged to be coaxial, so as to achieve the synchronous movement of the first optical path assembly and the second optical path assembly, such that the first optical path assembly and the second optical path assembly can remain stationary relative to each other during the movement of the first optical path assembly. During the movement, the image sensor can remain at the imaging center, which effectively improves the effectiveness and stability of the optical path assembly during light transmission and imaging.

In some embodiments of the present disclosure, the elevation central shaft is configured as a second hollow structure, and an inner wall of a housing of the second hollow structure encloses to form a partial hollow cavity.

The cavity center shaft is configured as a third hollow structure, and an inner wall of a hosing of the third hollow structure encloses to form a partial hollow cavity.

In the above implementation process, in order to form the corresponding hollow cavity inside the elevation transmission structure to accommodate the second optical path assembly, the elevation central shaft may be configured as the second hollow structure, such that the inner wall of the housing of the second hollow structure encloses to form the partial hollow cavity. The cavity center shaft may be configured as the third hollow structure, such that the inner wall of the housing of the third hollow structure encloses to form the partial hollow cavity, and thus the corresponding hollow cavity can be formed by combining and connecting the plurality of hollow structures. The second optical path assembly is arranged inside the elevation transmission structure without obstructing the light transmission and light receiving processing inside the elevation transmission structure, thereby achieving effective imaging processing.

In some embodiments of the present disclosure, the first optical path assembly includes: a lens, a lens barrel housing and a lens focusing assembly.

The lens is arranged inside or at an end of the lens barrel housing.

The lens barrel housing is fixed on the transmission structure.

The lens is configured to transmit light.

The lens focusing assembly is sleeved between the lens and the lens barrel housing.

The lens focusing assembly is configured to adjust a position of the lens in the first light transmission path of the first optical path assembly.

In the above implementation process, the first optical path assembly may include a lens for transmitting light and a lens barrel housing for connection and fixing. The lens may be arranged inside or at the end of the lens barrel housing to reduce the adverse effects of external water vapor, high temperature, liquid and other adverse factors on the lens. The lens barrel housing may be fixed on the external transmission structure, so as to drive the lens barrel housing and the internal lens to achieve corresponding movement according to the movement of the transmission structure, such that the first optical path assembly can be controlled by the transmission structure to move to the corresponding position for image acquisition and other processing, which is suitable for various shooting targets and application scenarios. In addition, considering that in the process of image acquisition, the corresponding focal length position in the optical path structure varies depending on the targets. Therefore, in order to achieve the real-time focusing function, the corresponding lens focusing assembly may be sleeved between the lens and the lens barrel housing to adjust the position of the lens in the first light transmission path of the first optical path assembly, such that the lens is adjusted to the appropriate focus position in the first light transmission path for light transmission, and the imaging quality is effectively improved, which is suitable for various image acquisition scenarios.

In a second aspect, an embodiment of the present disclosure provides an optical imaging method, including: controlling, by a control device, the optical imaging device according to any one of the devices described above to move to a target pose based on an imaging target; and acquiring, by the optical imaging device, an image at the target pose to obtain a target image.

In the above implementation process, considering the diversity of imaging targets, the corresponding shooting position varies depending on the imaging targets. Therefore, the optical imaging device may be controlled by the control device to move to the target pose for shooting the target according to the current imaging target, such that the optical imaging device acquires the image at the target pose to obtain the desired target image. Thanks to the relatively small overall device volume and size, the optical imaging device is applicable to various shooting scenarios and various types of imaging targets, which effectively expands the application scope of the optical imaging method and meets the various shooting requirements of users.

In some embodiments of the present disclosure, the step of acquiring, by the optical imaging device, the image at the target pose to obtain the target image includes:
acquiring, by an image sensor of the optical imaging device, the image to obtain an initial image, and sending the initial image to the control device;
determining, by the control device, whether an initial image meets a clarity requirement;
taking the initial image as the target image when the control device determines that the initial image meets the clarity requirement; and
controlling, by the control device, a lens focusing assembly and/or a sensor focusing assembly of the optical imaging device to adjust a focal length when the control device determines that the initial image does not meet the clarity requirement, until the image sensor acquires an image that meets the clarity requirement, and then taking the image as the target image.

In the above implementation process, after the optical imaging device reaches the target pose, images can be acquired by the image sensor provided therein to obtain the initial image. In order to improve the quality of the finally acquired image, the initial image may be analyzed by the control device and judged in combination with the preset clarity requirement to determine whether the initial image meets the clarity requirement. If the initial image meets the clarity requirement, it indicates that the initial image is relatively clear and can be directly used as the corresponding target image. If the initial image does not meet the clarity requirement, it indicates that the initial image may be blurred, and the control device may send a focusing instruction to the optical imaging device to control the lens focusing assembly of the optical imaging device to adjust the position of the lens, and/or to control the sensor focusing assembly to adjust the position of the image sensor, to adjust the focal length and re-acquire the image, until the image sensor acquires an image that meets the clarity requirement, and thus the currently acquired image is used as the final target image. As such, the clarity of the images acquired by the optical imaging device can be analyzed, and focus control processing can be performed when the clarity is low, so as to improve the quality of the final target image.

In summary, the embodiments of the present disclosure provide an optical imaging device and an optical imaging method. The straight-line optical path structure is disassembled into the folded optical path structure, and part of the optical path structure is arranged inside the transmission structure, such that the space inside the transmission structure is effectively utilized, and the volume occupied by the optical path assemblies is reduced, thereby reducing the overall device volume, size and weight of the optical imaging device, and meeting various miniaturization requirements for the device. In addition, the synchronous movement of the plurality of optical path assemblies is achieved, such that the optical imaging device can achieve stable optical imaging function during the movement.

### BRIEF DESCRIPTION OF DRAWINGS

To clearly illustrate the technical solutions of the embodiments of the present disclosure, the drawings required in the embodiments are briefly introduced below. It should be appreciated that the drawings described below only show some embodiments of the present disclosure and should not be considered as limiting the scope. For those skilled in the art, other drawings can be obtained according to these drawings without any creative effort.
FIG. 1 is a block schematic diagram of a control device according to some embodiments of the present disclosure;
FIG. 2 is a structural schematic diagram of an optical imaging device according to some embodiments of the present disclosure;
FIG. 3 is a detailed structural schematic diagram of an optical imaging device according to some embodiments of the present disclosure;
FIG. 4 is a structural schematic diagram of a second optical path assembly according to some embodiments of the present disclosure;
FIG. 5 is a structural schematic diagram of a first optical path assembly according to some embodiments of the present disclosure;
FIG. 6 is a schematic flowchart of an optical imaging method according to some embodiments of the present disclosure;
FIG. 7 is a detailed schematic flowchart of a step S310 according to some embodiments of the present disclosure;
FIG. 8 is a schematic flowchart of a further optical imaging method according to some embodiments of the present disclosure;
FIG. 9 is a schematic flowchart of a further optical imaging method according to some embodiments of the present disclosure;
FIG. 10 is a schematic flowchart of a further optical imaging method according to some embodiments of the present disclosure;
FIG. 11 is a detailed schematic flowchart of a step S320 according to some embodiments of the present disclosure;
FIG. 12 is a detailed schematic flowchart of a sub-step S324 according to some embodiments of the present disclosure;
FIG. 13 is a detailed schematic flowchart of a further sub-step S324 according to some embodiments of the present disclosure; and
FIG. 14 is an operating structural schematic diagram of an optical imaging system according to some embodiments of the present disclosure.

Reference signs: 100-control device; 111-memory; 112-storage controller; 113-processor; 114-peripheral interface; 115-input/output unit; 116-display unit; 200-optical imaging device; 210-first optical path assembly; 220-second optical path assembly; 230-transmission structure; 211-lens; 212-lens barrel housing; 2111-temperature modulation assembly; 213-lens focusing assembly; 2131-elastic assembly; 221-image sensor; 222-hollow cavity; 223-sensor focusing assembly; 231-horizontal transmission structure; 232-elevation transmission structure; 2410-second driving mechanism; 2411-first worm gear; 2412-first worm; 2413-elevation central shaft; 2414-cavity center shaft; 251-reflecting mirror; 252-fixing assembly; A-first light transmission path; B-second light transmission path; C-first light propagation direction; D-second light propagation direction; E-optical path.

### DESCRIPTION OF EMBODIMENTS

The technical solutions of embodiments of the present disclosure will be clearly and completely described below in conjunction with the drawings of the present disclosure. It is appreciated that the described embodiments are only some, rather than all, of the embodiments of the present disclosure. Based on the embodiments of the present disclosure, all other embodiments obtained by those skilled in the art without creative efforts shall fall within the protection scope of the embodiments of the present disclosure.

At present, the lens barrel is usually designed as a straight barrel, such as various types of astronomical telescopes and camera devices, and the optical path passes through the lens and reaches the image sensor along a straight line for image acquisition. The overall length of the lens barrel is relatively long, and the size of the entire lens barrel is relatively large, such that the device including the lens barrel has a large physical dimension and thus cannot meet the user's requirement for miniaturization of the device.

In order to solve the above problems, an embodiment of the present disclosure provides an optical imaging device. The optical imaging device may be various types of control devices with imaging function, such as various types of electronic telescopes and camera devices.

In some embodiments of the present disclosure, the optical imaging device can be arranged in a corresponding optical imaging system, and the optical imaging system can further include a control device for controlling the optical imaging device. The control device is communicatively connected to the optical imaging device to achieve corresponding data transmission and control functions. For example, the control device may be a separate external device connected to the optical imaging device through a network, Bluetooth, etc. The control device may also be a module of the optical imaging device internally integrated within the optical imaging device and communicatively connected thereto through wires.

For example, the control device may be a server, a personal computer (PC), a tablet computer, a smart phone, a personal digital assistant (PDA) , or other electronic device with logic computing capability, which can control the movement and image acquisition of the optical imaging device according to actual needs of the user.

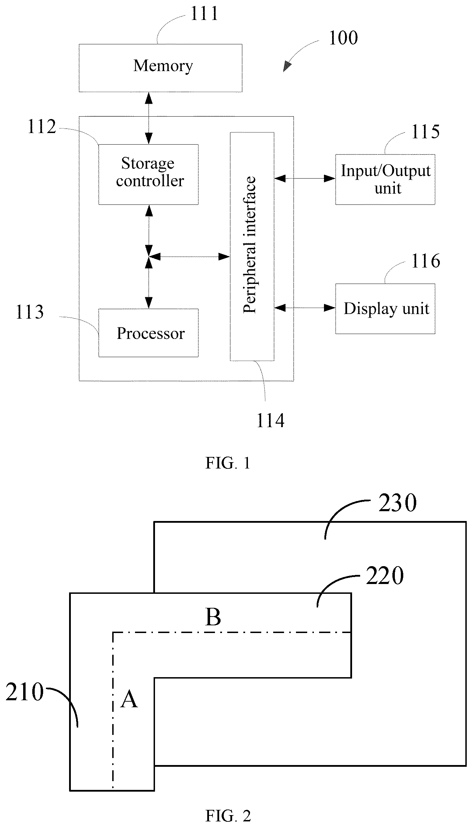

In some embodiments of the present disclosure, referring to FIG. 1, FIG. 1 is a block schematic diagram of a control device according to some embodiments of the present disclosure. A control device 100 may include a memory 111, a storage controller 112, a processor 113, a peripheral interface 114, an input/output unit 115, and a display unit 116. It should be understood by those skilled in the art that the structure shown in FIG. 1 is only for illustration and does not intend to limit the structure of the control device 100. For example, the control device 100 may also include more or fewer assemblies than those shown in FIG. 1, or may be configured different from that shown in FIG. 1.

The above-mentioned memory 111, storage controller 112, processor 113, peripheral interface 114, input/output unit 115 and display unit 116 are electrically connected to each other directly or indirectly to achieve data transmission or interaction. For example, these elements may be electrically connected to each other through one or more communication buses or signal lines. The processor 113 is configured to execute executable modules stored in the memory.

The memory 111 may be, but is not limited to, a random access memory (RAM), a read only memory (ROM), a programmable read-only memory (PROM), an erasable programmable read-only memory (EPROM), an electric erasable programmable read-only memory (EEPROM), etc. The memory 111 is configured to store programs, and the processor 113 executes the programs after receiving an execution instruction. The method executed by control device 100 defined by the process disclosed in any one of the embodiments of the present disclosure may be applied to or implemented by the processor 113.

The processor 113 may be an integrated circuit chip having signal processing capability. The processor 113 may be a general purpose processor, including a central processing unit (CPU), a network processor (NP), etc. The processor 113 may also be a digital signal processor (DSP), an application specific integrated circuit (ASIC), a field programmable gate array (FPGA) or other programmable logic devices, a discrete gate or transistor logic devices and a discrete hardware assembly. The methods, steps and logic block diagrams disclosed in the embodiments of the present disclosure may be implemented or executed by the processor 113. The general purpose processor may be a microprocessor or any conventional processor.

Various input/output devices are coupled to the processor 113 and the memory 111 via the peripheral interface 114. In some embodiments of the present disclosure, the peripheral interface 114, the processor 113 and the storage controller 112 may be implemented by a single chip. In some embodiments of the present disclosure, they may be implemented by separate chips, respectively.

The input/output unit 115 is configured to provide input data to the user. The input/output unit 115 may be, but is not limited to, a mouse and a keyboard.

The display unit 116 provides an interactive interface (such as a user operation interface) between the control device 100 and the user, or is configured to display image data for the user for reference. In some embodiments of the present disclosure, the display unit may be a liquid crystal display or a touch display. If the display unit is a touch display, it can be a capacitive touch screen or a resistive touch screen that supports single-point and multi-point touch operations. The support for single-point and multi-point touch operations means that the touch display can sense touch operations generated simultaneously from one or more positions on the touch display and convey the sensed touch operations to the processor for calculation and processing. In some embodiments of the present disclosure, the display unit 116 may display data such as various images acquired by the optical imaging device.

Referring to FIG. 2, FIG. 2 is a structural schematic diagram of an optical imaging device according to some embodiments of the present disclosure. The optical imaging device may include: a first optical path assembly 210, a second optical path assembly 220 and a transmission structure 230.

In some embodiments of the present disclosure, the transmission structure 230 may include various structures with transmission and driving functions, and the transmission structure 230 may be provided with a plurality of corresponding driving mechanisms and driving members, such as motors, transmission belts, lead screws, worm gears, worms and other devices with transmission function.

In some embodiments of the present disclosure, the first optical path assembly 210 is fixedly connected to the transmission structure 230, and the first optical path assembly 210 may be fixed to the transmission structure 230 by means of screws, nuts, buckles, etc. The first optical path assembly 210 is configured to move under the driven of the transmission structure 230. The second optical path assembly 220 is arranged inside the transmission structure 230 and is configured to move under the driven of the transmission structure 230.

It should be noted that the overall optical path assembly can be disassembled into two modules, namely, the first optical path assembly 210 and the second optical path assembly 220. The first optical path assembly 210 and the second optical path assembly 220 are in optical path communication with each other. The first optical path assembly 210 arranged outside the transmission structure 230 may be used as an input end of the light, and the second optical path assembly 220 arranged inside the transmission structure 230 may be used as a receiving end of the light. The first light transmission path A of the first optical path assembly 210 and the second light transmission path B of the second optical path assembly 220 may be configured in an angled structure to achieve a folded optical path structure via reflection and reduce the straight-line distance of the optical path assembly, thereby reducing the volume occupied by the straight-line optical path structure and the installation difficulty. In addition, in some embodiments of the present disclosure, there is no need to increase the width, thickness and other dimensions of the optical path assembly. A part of the optical path structure is arranged inside the transmission structure 230, such that the space inside the transmission structure 230 is effectively utilized to fully utilize the internal and external space of the optical imaging device 200 and reduce the volume occupied by the optical path assemblies, thereby reducing the overall device volume, size and weight of the optical imaging device 200, and meeting various requirements for the miniaturization of the device.

For example, the angle between the two optical path assemblies may be set according to specific structural requirements, appearance requirements, etc. For example, it may be set to 85 to 95 degrees, and the like, preferably 90 degrees, such that the folded optical path structure with an approximately right angle can be achieved, and the space volume occupied by the optical path assemblies is further reduced. In addition, due to the folded optical path structure with the right angle, the scratches of the optical path assemblies with other external structures during movement can be reduced, thereby achieving stable image acquisition.

It should be noted that since the first optical path assembly 210 needs to be aligned with the imaging target for processing, when the transmission structure 230 moves, it can drive the second optical path assembly 220 arranged inside and the first optical path assembly 210 fixedly connected outside to move synchronously, and the transmission structure 230 can move according to the movement requirements of the first optical path assembly 210. During the movement of the transmission structure 230, the second optical path assembly 220 and the first optical path assembly 210 remain stationary relative to each other, such that the relative static relationship between the optical path assemblies and the image/imaging sensor is not affected during the movement, and the optical imaging device 200 can achieve stable optical imaging function during the movement.

In some embodiments of the present disclosure, in order to track the imaging target, the transmission structure 230 can achieve multi-dimensional motion based on tracking in latitude and longitude, or based on relative motion in latitude and longitude. During the motion in different dimensions, the linear speeds between the first optical path assembly 210 and the second optical path assembly 220 may be consistent or inconsistent. However, the first optical path assembly 210 and the second optical path assembly 220 as a whole can still maintain a relatively static L-shaped integrated structure to achieve stable light transmission and optical imaging function.

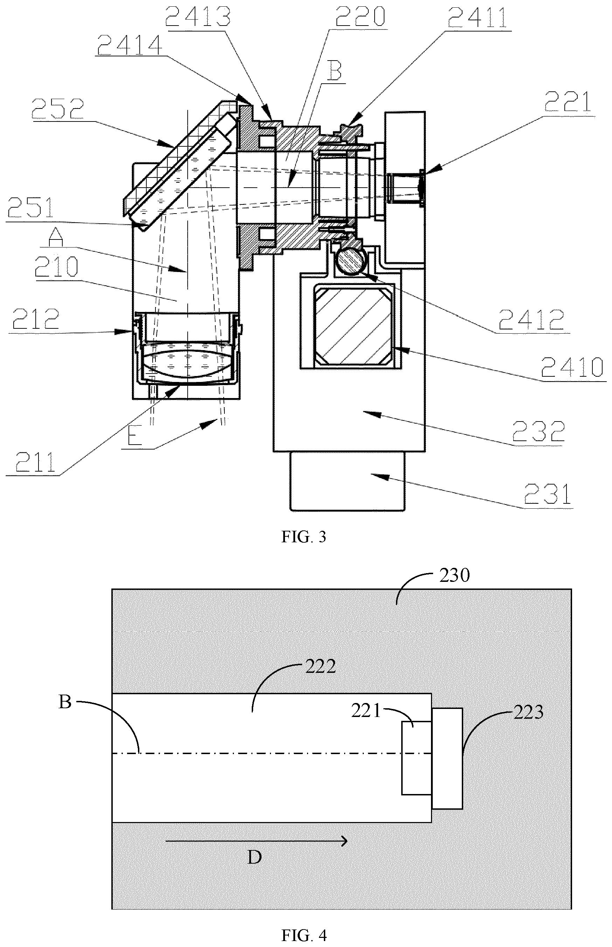

In some embodiments of the present disclosure, referring to FIG. 3, FIG. 3 is a detailed structural schematic diagram of an optical imaging device according to some embodiments of the present disclosure. In order to achieve the automatic tracking and shooting functions for the target, the transmission structure 230 may include: a horizontal transmission structure 231 and an elevation transmission structure 232, so as to control the synchronous movement of the first optical path assembly 210 and the second optical path assembly 220 in two different axial directions, horizontal and height. It should be noted that the horizontal transmission structure 231 and the elevation transmission structure 232 are connected to each other, and a rotation center shaft of the horizontal transmission structure 231 and a rotation center shaft of the elevation transmission structure 232 are arranged perpendicular to each other to achieve adjustment in latitude and longitude, respectively. During movement, the current actual pose of the optical path assemblies can be determined according to the actual rotation of the two rotation center shafts.

In order to achieve synchronous movement of the two optical path assemblies, the first optical path assembly 210 is fixed on the connection area outside the elevation transmission structure 232, and the second optical path assembly 220 is arranged in a hollow cavity corresponding to the connection area inside the elevation transmission structure 232, such that the space in the elevation transmission structure 232 can be effectively utilized, and the space volume occupied by the optical path assemblies is reduced, thereby reducing the overall device volume, size and weight of the optical imaging device 200, and meeting various requirements for the miniaturization of the device.

The horizontal transmission structure 231 is configured to drive the elevation transmission structure 232, the first optical path assembly 210 and the second optical path assembly 220 to move in the horizontal axial direction parallel to the installation plane of the optical imaging device 200 so as to enable the rotation in the horizontal angular direction. The elevation transmission structure 232 is configured to drive the first optical path assembly 210 and the second optical path assembly 220 to move in the elevation axial direction in which an angle relative to the installation plane changes, so as to enable the movement in the elevation angle direction.

It should be noted that the rotation center shaft of the horizontal transmission structure 231 may be arranged perpendicular to the installation plane, and the horizontal axial direction during the movement of the rotation center shaft of the horizontal transmission structure 231 may be used as the rotation axial direction with the normal of the installation plane as the centerline. The rotation center shaft of the elevation transmission structure 232 may be arranged parallel to the installation plane, and the elevation axial direction during the movement of the rotation center shaft of the elevation transmission structure 232 may be used as the rotation axial direction with a line parallel to the installation plane as the centerline.

It should be noted that the actual position of the connection area and the connection structure of the horizontal transmission structure 231 and the elevation transmission structure 232 may be determined according to the actual size of the first optical path assembly 210. For example, the connection area is arranged at a first edge of the elevation transmission structure 232, and connectors (such as screws and nuts) between the horizontal transmission structure 231 and the elevation transmission structure 232 are arranged at a second edge that is diagonally related to or opposite to the first edge, so as to reduce adverse situations such as collisions between the horizontal transmission structure 231 and the first optical path assembly during the movement of the two optical path assemblies, thereby enabling movement control in both horizontal and elevation axial directions without affecting each other, and effectively improving the efficiency and accuracy of automatic target tracking by the optical imaging device 200.

In some embodiments of the present disclosure, FIG. 3 shows a first light transmission path A, a second light transmission path B, and a virtual optical path E, to illustrate the light transmission process.

For example, the elevation transmission structure 232 may be provided with various motors, worm gears, worms and other devices to achieve the adjustment at the elevation angle. The horizontal transmission structure 231 may also be provided with various motors, worm gears, worms and other devices to achieve the adjustment at the horizontal angle.

In some embodiments of the present disclosure, the first optical path assembly 210 may be fixed on the horizontal transmission structure 231, and the second optical path assembly 220 may be arranged inside the horizontal transmission structure 231, so that the first optical path assembly 210 and the second optical path assembly 220 are driven to move by the horizontal transmission structure 231.

In some embodiments of the present disclosure, referring to FIG. 4, FIG. 4 is a structural schematic diagram of a second optical path assembly according to some embodiments of the present disclosure. The second optical path assembly 220 may include an image sensor 221. An inner wall of a housing of the elevation transmission structure 232 encloses to form a hollow cavity 222, and the hollow cavity 222 is configured to transmit the light refracted by the first optical path assembly 210 to accommodate the second light transmission path B of the second optical path assembly 220. In an embodiment, the image sensor 221 is arranged at the end of the hollow cavity 222 away from the connection area, the hollow cavity 222 is configured to transmit the light refracted by the first optical path assembly 210, and the image sensor 221 is configured to receive the light and perform imaging processing to obtain the target image.

Since the second optical path assembly 220 is arranged inside the transmission structure 230, the hollow cavity 222 may be formed by enclosing the inner wall of the housing of the elevation transmission structure 232, and the image sensor 221 is arranged at the end of the hollow cavity 222 away from the first optical path assembly 210, so as to achieve the design of a relatively long-distance optical path through the hollow cavity 222, which is suitable for various shooting targets and application scenarios.

For example, the image sensor 221 may be configured as various complementary metal-oxide-semiconductor (CMOS) sensors, charge-coupled device (CCD), and other devices that can convert optical signals into electrical signals to achieve corresponding imaging function.

In some embodiments of the present disclosure, continuously referring to FIG. 4, in the process of image acquisition, the corresponding focal length position in the optical path structure varies depending on the different targets. Therefore, in order to achieve the real-time focusing function, the second optical path assembly 220 may further include: a sensor focusing assembly 223.

In an embodiment, the sensor focusing assembly 223 is arranged at the end of the image sensor 221 away from the first optical path assembly 210, and is configured to adjust the position of the image sensor 221 in the second optical transmission path B of the second optical path assembly 220. The corresponding sensor focusing assembly 223 may be provided at the end near the image sensor 221 and away from the first optical path assembly 210, i.e., the end that does not affect the normal transmission of light, so as to adjust the position of the image sensor 221 in the second optical transmission path B of the second optical path assembly 220, thereby adjusting the image sensor 221 to a suitable focusing position in the second optical transmission path B for light receiving and imaging processing, and effectively improving the imaging quality, which is suitable for various image acquisition scenarios.

It should be noted that the second light transmission path B is used as the transmission path of the light in the second optical path assembly 220, which may be collinear with the centerline of the hollow cavity 222. A second light propagation direction D in the second optical path assembly 220 is shown in FIG. 4. The light enters from the end away from the image sensor 221 and is transmitted to the image sensor 221 along the second light transmission path B.

For example, the sensor focusing assembly 223 may be configured as a device having a position adjustment function, such as a motor, a lead screw, or other devices.

In some embodiments of the present disclosure, the sensor focusing assembly 223 may include: a first driving mechanism and a first driving member. The first driving mechanism is connected to the first driving member, and the first driving member is connected to the image sensor 221. The first driving mechanism is configured to provide the first driving member with a driving force parallel to the second light transmission path B, and the first driving member is configured to drive the image sensor 221 to move in the second light transmission path B based on the driving force. The corresponding first driving mechanism and the first driving member may be provided to control the image sensor 221 to move in the second light transmission path B. The first driving mechanism is connected to the first driving member, and the first driving member is connected to the image sensor 221. Accordingly, the first driving mechanism provides the driving force for the first driving member to move in the direction parallel to the second light transmission path B, and the first driving member moves based on the driving force and drives the connected image sensor 221 to move, such that the movement of the image sensor 221 in the second light transmission path B can be accurately and effectively controlled, and the accuracy of the image sensor 221 during the focal length adjustment and the focusing is effectively improved.

For example, the first driving mechanism may be set as a corresponding motor, such as a lead screw motor, and the first driving member may be set as a corresponding lead screw, connecting rod or other structures. The lead screw motor drives the lead screw to push the image sensor 221 to move forward and backward in the direction parallel to the second light transmission path B. The forward and backward movement control can be achieved only by reserving a corresponding space at the end of the image sensor 221 away from the first optical path assembly 210, which can fully utilize the space in the transmission structure 230. Accordingly, the first driving member has low control difficulty and cost, and the purpose of changing the focal length of the image sensor 221 and focusing on different imaging targets can be achieved at low cost and high efficiency.

In some embodiments of the present disclosure, the sensor focusing assembly 223 may further be provided with a corresponding motor bracket. The first driving mechanism may be fixed on the motor bracket, and the image sensor 221 may be fixed on a sensor sliding bracket. The first driving member may be connected to the sensor sliding bracket through fixing members such as nuts. The first driving member moves forward and backward under the drive of the first driving mechanism to push the sensor sliding bracket and the image sensor 221 fixed thereon to move.

It should be noted that the movement stroke of the first driving member is determined based on the imaging clarity requirement of the image sensor 221. Due to the different types and application scenarios of the optical imaging device 200, the models of the applied image sensors 221 are different. Therefore, the imaging clarity requirements of different types of image sensors 221 are also different. In order to achieve high-precision adjustment of the focal length position of the image sensor 221, the movement stroke of the first driving member can be set according to the imaging clarity requirement of the image sensor 221 used, which can provide targeted adjustment of the focal length position for each type of image sensor 221, and effectively improve the imaging clarity of the image sensor 221 at the focal length position, thereby improving the imaging quality.

In some embodiments of the present disclosure, the imaging clarity requirement of the image sensor 221 may be determined according to the model of the image sensor 221, the distance between the image sensor 221 and the imaging target, and the size of the imaging target, etc.

Referring to Fig. 3, in some embodiments of the present disclosure, the elevation transmission structure 232 may include: a driving mechanism and a driving member. In order to distinguish from the first driving mechanism and the first driving member mentioned above, the driving mechanism of the elevation transmission structure is denoted as the second driving mechanism, and the driving member is denoted as the second driving member.

In an embodiment, the second driving mechanism 2410 is connected to the second driving member, and is configured to provide a driving force in the elevation axial direction to the second driving member, and the second driving member is configured to drive the first optical path assembly 210 and the second optical path assembly 220 to move in the elevation axial direction based on the driving force. The movement of the first optical path assembly 210 and the second optical path assembly 220 in the elevation axial direction can be accurately and effectively controlled, which effectively improves the accuracy of the height control of the first optical path assembly 210 and the second optical path assembly 220, thereby further improving the effectiveness of the optical imaging device 200 in automatic target tracking.

For example, the second driving mechanism 2410 may be set as a corresponding torque motor, a brush DC motor, a brushless DC motor, an asynchronous motor, a synchronous motor, a stepper motor, a reduction motor, etc., and the second driving member may be set as a corresponding worm gear, a worm, a stator, a rotor, a synchronous wheel or other structures. The second driving mechanism 2410 and the second driving member may be connected to each other through a belt or other devices to transmit the driving force and achieve the adjustment of the elevation angle through rotation. When the torque motor, the worm gear and the worm are used for rotation control, a fixed permanent magnet or electromagnetic coil is usually used in the torque motor to generate a magnetic field. This magnetic field may be constant, or may be adjustable in strength and direction by the controller. After the torque motor is energized, the magnetic field interacts with the current through the armature (i.e., the rotor part of the motor). According to the direction of the current and the polarity of the magnetic field, a moment or torque can be generated, which will be transmitted to the worm and worm gear. The torque motor adjusts the output torque by changing the magnitude and direction of the current to adapt to different load requirements. The two transmission shafts of the worm gear and the worm intersect and are perpendicular to each other. When the two mesh with each other, the worm rotates to drive the worm gear to rotate by one or several teeth (depending on the number of heads of the worm). Since the transmission speed ratio of the worm gear and the worm is equal to the number of heads of the worm divided by the number of teeth of the worm gear, a large reduction ratio can be achieved. During the control of rotation, the worm gear and the worm have a large transmission ratio range and high load capacity, and they have compact structure, low noise and high self-locking performance. The stator of the brush DC motor has a static magnetic field (usually generated by permanent magnets or electromagnets), and the rotor has brushes and commutators. When the current passes through the brushes and commutators, a magnetic field is generated on the rotor, and the magnetic field interacts with the magnetic field of the stator to drive the rotor to rotate. The brushless DC motor usually has permanent magnets embedded in the rotor and multi-phase windings on the stator, which results in low cost in rotation control, low control difficulty, and adjustable control range is. The direction of the current is controlled by an electronic commutator to achieve continuous rotation of the rotor. The position of the rotor can be detected by Hall sensors or back electromotive force. The controller switches the direction of the current according to the position information of the rotor, such that the rotor is continuously under driven of the forward driving force, resulting in high efficiency, low noise, and long service life during the control of rotation. The asynchronous motor has multi-phase windings on the stator, and squirrel cage or wound windings (or only guide bars and end rings) on the rotor. When AC is applied to the stator winding, a rotating magnetic field is generated, which induces current in the rotor, thereby generating electromagnetic torque to drive the rotor to rotate, resulting in low cost in control, high efficiency, and high stability. The rotor of the synchronous motor is usually equipped with permanent magnets or DC excitation windings to achieve synchronous rotation with the magnetic field of the stator. The magnetic field of the stator interacts with the magnetic field of the rotor to generate electromagnetic torque, causing the rotor to rotate at the same speed as the magnetic field of the stator, resulting in high accuracy and stability during the control of rotation. The stepper motor can precisely control the order and magnitude of the current to rotate the rotor at a predetermined step angle and drive the rotor teeth to rotate step by step by electromagnetic force. Once an electric pulse is input, the rotor rotates by a step angle, resulting in high accuracy and low noise during the control of rotation, and making it easy to control.

It should be noted that, in order to form the corresponding hollow cavity 222 inside the elevation transmission structure 232 to accommodate the second optical path assembly 220, the second driving member may include a first hollow structure, and an inner wall of a housing of the first hollow structure encloses to form a partial hollow cavity. For example, the first hollow structure may include a hollow worm gear, a hollow synchronous wheel or a hollow gear and other structures.

For example, referring to FIG. 3, in order to achieve a highly efficient reduction ratio, a high transmission ratio and load capacity, the second driving member may include: a first worm gear 2411 and a first worm 2412.

The first worm 2412 is connected to the second driving mechanism 2410, the first worm gear 2411 is connected to the first worm 2412, the first worm gear 2411 is arranged around the second optical path assembly 220, and the first worm 2412 and the first worm gear 2411 are configured to drive the first optical path assembly 210 and the second optical path assembly 220 to move in the elevation axial direction based on the torque power provided by the second driving mechanism 2410. The movement control can be achieved through the connection with the second driving mechanism 2410 and the connection between the worm gear and the worm. Furthermore, considering that the elevation transmission structure 232 needs to drive the second optical path assembly 220 to move, the first worm gear 2411 may be arranged around the second optical path assembly 220, such that the first worm 2412 and the first worm gear 2411 can drive the second optical path assembly 220 and the first optical path assembly 210 connected to the elevation transmission structure 232 to move in the elevation axial direction according to the torque power provided by the second driving mechanism 2410. The structure with the worm gear sleeved can drive the second optical path assembly 220 to move, thereby reducing the adverse effects of the movement process on imaging.

It should be noted that in order to realize the hollow cavity structure, the first worm gear 2411 of the second driving member may be configured as the corresponding first hollow structure, such that the inner wall of the housing of the first hollow structure encloses to form the partial hollow cavity 222, providing sufficient hollow space for the hollow cavity 222, and the second optical path assembly 220 can be arranged inside the elevation transmission structure 232 without obstructing the light transmission and light receiving processing inside the elevation transmission structure 232, thereby achieving effective imaging processing.

It should be noted that, referring to FIG. 3, the elevation transmission structure 232 may also include: an elevation central shaft 2413. The second driving member drives the first optical path assembly 210 and the second optical path assembly 220 to move along the axial rotation direction of the elevation central shaft 2413. The elevation central shaft 2413 and the first optical path assembly 210 are connected to each other through a cavity center shaft 2414. The elevation central shaft 2413 is connected to the cavity center shaft 2414, and the elevation central shaft 2413 and the cavity center shaft 2414 are coaxial. The elevation transmission structure 232 is provided with a corresponding elevation central shaft 2413 to realize the rotation at the elevation angle. During the movement control process in the elevation axial direction, the first optical path assembly 210 and the second optical path assembly 220 are driven to move synchronously along the axial rotation direction of the elevation central shaft 2413 by the second driving member. Furthermore, in order to drive the first optical path assembly 210 connected to the elevation transmission structure 232 to move synchronously, the cavity center shaft 2414 may be provided between the first optical path assembly 210 and the elevation central shaft 2413. The first optical path assembly 210 and the elevation central shaft 2413 are connected to each other via the cavity center shaft 2414, and the elevation central shaft 2413 and the cavity center shaft 2414 are set to be coaxial, so as to realize the synchronous movement of the first optical path assembly 210 and the second optical path assembly 220, such that the first optical path assembly 210 and the second optical path assembly 220 remain stationary relative to each other during the movement of the first optical path assembly 210. The image sensor 221 can be maintained at the imaging center all the time during the movement, thereby improving the effectiveness and stability of the optical path assemblies for light transmission and imaging.

In some embodiments of the present disclosure, the end of the cavity center shaft 2414 that is connected to the first optical path assembly 210 may be the corresponding connection area, and the cavity center shaft 2414 may be fixedly connected to the first optical path assembly 210 by means of screws, nuts, buckles, etc., so as to drive the first optical path assembly 210 to move through the fixed connection. It should be noted that, in order to facilitate assembly, the height center axis 2413 and the cavity center shaft 2414 may be set as two separate structures that are connected to each other, or as an integrated structure. Even if they are separated, the structures related to the inner/outer/front/rear configuration can be changed to achieve coaxial synchronous movement.

In some embodiments of the present disclosure, the elevation central shaft 2413 may be fixed in the elevation transmission structure 232 through brackets, a deep groove ball bearing and corresponding fixing members.

In some embodiments of the present disclosure, in order to form the corresponding hollow cavity 222 inside the elevation transmission structure 232 to accommodate the second optical path assembly 220, the elevation central shaft 2413 may be set as the second hollow structure, such that the inner wall of the housing of the second hollow structure encloses to form the partial hollow cavity 222, and the cavity center shaft 2414 may be set as the third hollow structure, such that the inner wall of the housing of the third hollow structure encloses to form the partial hollow cavity 222. As a result, the corresponding hollow cavity 222 can be formed by combining and connecting the plurality of hollow structures. The second optical path assembly 220 is arranged inside the elevation transmission structure 232 without obstructing the light transmission and light receiving processing inside the elevation transmission structure 232, thereby achieving effective imaging processing.

For example, the hollow sizes of the first hollow structure, the second hollow structure, and the third hollow structure may be designed according to the actual optical path requirements of the second optical path assembly 220 and the size of the image sensor 221. For example, when the size of the image sensor 221 is relatively large, the optical path requirements of the second optical path assembly 220 require a larger space for the cavity part, and thus the first worm gear 2411, the elevation central shaft 2413, and the cavity center shaft 2414 with large hollow sizes may be provided.

In some embodiments of the present disclosure, the axes of the elevation central shaft 2413 and the cavity center shaft 2414 coincide with the photosensitivity imaging center of the image sensor 221.

In some embodiments of the present disclosure, the horizontal transmission structure 231 may include: a third driving mechanism and a third driving member.

In an embodiment, the third driving mechanism is connected to the third driving member, and the third driving member is connected to the elevation transmission structure 232. The third driving mechanism is configured to provide a horizontal axial driving force to the third driving member, and the third driving member is configured to drive the elevation transmission structure 232, the first optical path assembly 210 and the second optical path assembly 220 to move in the horizontal axial direction based on the driving force. The corresponding third driving mechanism and third driving member may be provided to control the first optical path assembly 210 and the second optical path assembly 220 to move in the horizontal axial direction. The third driving mechanism is connected to the third driving member, and the third driving member is connected to the elevation transmission structure 232, so as to provide the driving force to the third driving member to move in the horizontal axial direction through the third driving mechanism. The third driving member moves based on the driving force and drives the connected elevation transmission structure 232, the second optical path assembly 220 inside the elevation transmission structure 232, and the first optical path assembly 210 connected to the elevation transmission structure 232 to move synchronously. The movement of the first optical path assembly 210 and the second optical path assembly 220 in the horizontal axial direction can be accurately and effectively controlled, which effectively improves the accuracy of the horizontal control of the first optical path assembly 210 and the second optical path assembly 220, thereby further improving the effectiveness of the optical imaging device 200 in automatic target tracking.

For example, the third driving mechanism may be set correspondingly as a brush DC motor, a brushless DC motor, an asynchronous motor, a synchronous motor, a stepper motor, a reduction motor, etc., and the driving member may be set correspondingly as a worm gear, a worm, a stator, a rotor, a synchronous wheel or other structures. The third driving mechanism and the third driving member may be connected to each other via a belt or other devices to transmit the driving force and achieve the adjustment of the horizontal angle through rotation. The type and working mode of the third driving mechanism and the third driving member are similar to those of the second driving mechanism and the second driving member, which will not be elaborated in the present disclosure.

In some embodiments of the present disclosure, a highly efficient reduction ratio, a high transmission ratio and load capacity, the third driving member may include: a second worm gear and a second worm.

In an embodiment, the second worm is connected to the third driving mechanism, the second worm gear is connected to the second worm and the elevation transmission structure 232, and the second worm and the second worm gear are used to drive the elevation transmission structure 232, the first optical path assembly 210 and the second optical path assembly 220 to move in the horizontal axial direction based on the torque power provided by the third driving mechanism. The movement control can be achieved through the connection with the third driving mechanism and the connection between the worm gear and the worm. The second worm and the second worm gear can drive the connected elevation transmission structure 232, the second optical path assembly 220 inside the elevation transmission structure 232, and the first optical path assembly 210 connected to the elevation transmission structure 232 to move in the horizontal axial direction according to the torque power provided by the third driving mechanism, and the two optical path assemblies can be driven to move through the synchronously moving structure, thereby reducing the adverse effects of the moving process on imaging.

In some embodiments of the present disclosure, the horizontal transmission structure 231 may be provided correspondingly with a plurality of bearings, a center shaft and other components to achieve rotation control at a horizontal angle.

In some embodiments of the present disclosure, the material of each device structure of the transmission structure 230 may be selected according to the weight requirement or application requirement of the optical imaging device 200. For example, when the weight requirement of the optical imaging device 200 is lightweight, each component structure may be made of plastic material. When the application requirement of the optical imaging device 200 is high strength, each component structure may be made of metal material.

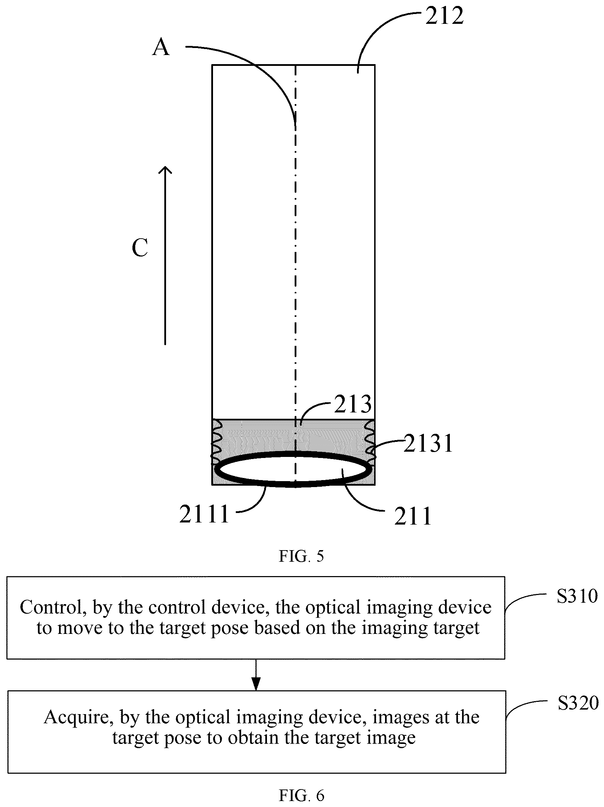

In some embodiments of the present disclosure, referring to FIG. 5, FIG. 5 is a structural schematic diagram of a first optical path assembly according to some embodiments of the present disclosure. The first optical path assembly 210 may include: a lens 211, a lens barrel housing 212 and a lens focusing assembly 213.

The lens 211 may be arranged inside or at the end of the lens barrel housing 212, the lens barrel housing 212 is fixed on the transmission structure 230, and the lens 211 is used to transmit light. The lens 211 is arranged inside or at the end of the lens barrel housing 212 to reduce the adverse effects of external water vapor, high temperature, liquid and other adverse factors on the lens. The lens barrel housing 212 is fixed on the external transmission structure 230, so as to drive the lens barrel housing 212 and the internal lens 211 to achieve corresponding movement according to the movement of the transmission structure 230. The first optical path assembly 210 can be controlled by the transmission structure 230 to move to the corresponding position for image acquisition and other processing, which is suitable for various shooting targets and application scenarios.

The lens 211 may be sleeved inside or at the end of the lens barrel housing 212, and a corresponding space can be reserved between the lens 211 and the lens barrel housing 212. For example, the lens 211 is configured as a circular structure, and the lens barrel housing 212 may be configured as a square structure with a side length greater than the diameter of the circular structure. The remaining space between the lens 211 and the lens barrel housing 212 may be used to place the lens focusing assembly 213, and the lens focusing assembly 213 may be sleeved between the lens 211 and the lens barrel housing 212 to adjust the position of the lens 211 in the first light transmission path A of the first optical path assembly 210. A corresponding lens focusing assembly 213 may be arranged between the lens 211 and the lens barrel housing 212 to adjust the position of the lens 211 in the first light transmission path A in the first optical path assembly 210, so as to adjust the lens 211 to a suitable focusing position in the first light transmission path A for light transmission, and effectively improve the imaging quality, which is suitable for various image acquisition scenarios.

In some embodiments of the present disclosure, the lens focusing assembly 213 can also be arranged at the end of the lens 211 close to the center of the lens barrel housing 212 to adjust the position of the lens 211 arranged inside or at the end of the lens barrel housing 212. The lens focusing assembly 213 can adjust the position of the lens 211 inside the lens barrel housing 212. In some application scenarios that require a longer focal length, the lens focusing assembly 213 can also control the lens 211 arranged at the end of the lens barrel housing 212 to move to the outside of the lens barrel housing 212 for light transmission processing. FIG. 2 only schematically shows a structure in which the lens focusing assembly 213 is sleeved between the lens 211 and the lens barrel housing 212, and other structures will not be elaborated in the present disclosure.

It should be noted that the first light transmission path A is the transmission path of the light in the first optical path assembly 210, which can be collinear with the centerline of the lens barrel housing 212. A first light propagation direction C is shown in FIG. 3. The light enters from the lens 211 and is transmitted along the first light transmission path A to another end of the lens barrel housing 212.

For example, the lens focusing assembly 213 may be configured as a device having a position adjustment function, such as a motor, a pulley, a slider, or other devices.

In some embodiments of the present disclosure, the lens focusing assembly 213 may include: a fourth driving mechanism and a fourth driving member. The fourth driving mechanism is connected to the fourth driving member, and the fourth driving member is connected to the lens 211. The fourth driving mechanism is configured to provide the fourth driving member with a driving force parallel to the first light transmission path A, and the fourth driving member is configured to drive the lens 211 to move in the first light transmission path A based on the driving force. The corresponding fourth driving mechanism and the fourth driving member may be provided to control the lens 211 to move in the first light transmission path A. The fourth driving mechanism is connected to the fourth driving member, and the fourth driving member is connected to the lens 211, so as to provide the driving force to the fourth driving member to move in a direction parallel to the first light transmission path A through the fourth driving mechanism. The fourth driving member moves based on the driving force and drives the connected lens 211 to move. The movement of the lens 211 in the first light transmission path A can be accurately and effectively controlled, which effectively improves the accuracy of the lens 211 during focal length adjustment and focusing.

For example, the fourth driving mechanism may be set as a corresponding motor, such as a lead screw motor, and the fourth driving member may be set as a corresponding pulley, slider, push block, bearing and other structures. One or more corresponding guide rails may be arranged inside the barrel housing 212. When the barrel housing 212 is configured as a square cylindrical structure, corresponding slide rails can be arranged at the four corners of the cylindrical structure, respectively, to connect with the plurality of fourth driving members. The guide rail can be pressed into the positioning hole inside the lens barrel housing 212 and closely matched therewith, such that the guide rail is parallel to the first light transmission path A of the first optical path assembly 210, and fourth driving member can have low control difficulty and low. The corresponding fourth driving member may also be made of wear-resistant materials such as stainless steel to reduce the wear caused by friction between the fourth driving member and the guide rail during movement, thereby further extending the service life of the fourth driving member. Furthermore, in order to fix the lens 211, a corresponding bracket of the lens 211 may be provided. The bracket of the lens 211 may form a hole-shaft-fit with the guide rail through its own sliding groove structure. The bracket of the lens 211 is connected to the fourth driving member, and the fourth driving mechanism may be connected to the fourth driving member through its own lead screw and other structures. When the motor lead screw rotates, the fourth driving member may perform linear reciprocating motion in the direction parallel to the first light transmission path A. The fourth driving member transmits the push force (pull force) to the lens 211 bracket by connecting to the guide groove of the lens 211 bracket, and drives the lens 211 bracket and the lens 211 fixed thereon to move forward and backward (up and down), thereby realizing a change in focal length and improving the effectiveness and force uniformity when adjusting the position of the lens 211.

It should be noted that the movement stroke of the fourth driving member is determined based on the focus information and/or the focal length information of the lens 211. Due to the different types and application scenarios of the optical imaging device 200, the models of the lenses 211 used are different. Therefore, the focus information in different scenarios and the focal length information of different types of lenses 211 are different. In order to achieve high-precision adjustment of the focal length position of the lens 211, the movement stroke of the fourth driving member may be set according to the focus information corresponding to the scenario and/or the focal length information of the used lens 211, such that the focal length position can be adjusted specifically for different scenarios and/or each type of lens 211, which effectively improves the effectiveness of the focal length position of the lens 211 and the efficiency of focusing, thereby improving the imaging quality.

In some embodiments of the present disclosure, the focus information may be determined according to parameters such as the distance and size of the imaging target, and the focal length information of the lens 211 may be determined according to the model, material, thickness, etc. of the lens 211.

In some embodiments of the present disclosure, the lens focusing assembly 213 may be further provided with a corresponding position sensor to control the movement distance of the fourth driving member under driven of the fourth driven mechanism.

In some embodiments of the present disclosure, the lens barrel housing 212 may be configured as a plurality of shapes, such as cylindrical, columnar, etc. The lens barrel housing 212 may be made of various materials such as metal materials and plastic materials. The shape and material of the lens barrel housing 212 may be designed and selected according to actual volume requirements, weight requirements, etc.

It should be noted that the lens 211 may include an achromatic lens composed of a plurality of lenses. Considering that in the optical imaging process, the different refractive indices of different colored lights often lead to abnormal situations such as partial color blurring, adverse effects such as imaging blurring may occur, leading to adverse effect on the imaging quality. In order to effectively improve the quality of the image, the lens 211 may be set as the achromatic lens composed of the plurality of lenses, for example, a three-piece Apochromatic (APO) main lens, etc., which can enable multiple colored lights to converge to the same point through special optical design and material selection. As such, the chromatic aberration can be eliminated or greatly reduced, the focusing effect of the lens 211 can be optimized, the light focusing and transmission capabilities for imaging can be improved, details can be better preserved during imaging, the picture can be more delicate and clear, and the adverse situations caused by chromatic aberration can be reduced, which is suitable for various application scenarios with high-precision imaging requirements.

For example, the three-piece apochromatic lens may be designed through a bonding process. The aperture of the lens 211 is designed to be 30 mm, and the focal length is designed to be 150 mm, thereby providing excellent light gathering and transmission capabilities for the optical imaging device.

For example, the lens 211 may be made of low-dispersion materials such as fluorite lens, AD glass, UD glass, ED glass, etc., to further reduce chromatic aberration.

In some embodiments of the present disclosure, the lens 211 may be arranged inside or at the end of the lens barrel housing 212. It should be noted that the first end of the lens barrel housing 212 may be fixedly connected to the transmission structure 230 at a position corresponding to the second optical path assembly 220 by means of a fixing member, such as a screw, a nut or welding, or a fixing method. Moreover, in order to transmit light, the lens 211 may be arranged inside or at the end of the second end of the lens barrel housing 212 to reduce the adverse effects of external water vapor, high temperature, liquid, and other adverse factors on the lens 211. The lens barrel housing 212 is fixed on the external transmission structure 230, so as to drive the lens barrel housing 212 and the internal lens 211 to achieve corresponding movement according to the movement of the transmission structure 230. The first optical path assembly 210 can be controlled by the transmission structure 230 to move to a corresponding position for image acquisition and other processing, which is suitable for various shooting targets and application scenarios.

In some embodiments of the present disclosure, a corresponding filter assembly may be provided on the lens barrel housing 212, and the filter assembly may be combined with the lens 211 by means of magnetism, snap-fit, etc., so as to protect the lens 211 in strong light, or to filter dark fields and light waves.

In some embodiments of the present disclosure, referring to FIG. 5. Considering the temperature difference in the application scenarios of the optical imaging device 200, the lens 211 may experience adverse situations such as fogging due to the temperature difference, which may affect the normal image acquisition of the optical imaging device 200. Manual processing may cause damage to the lens 211 or leave marks on the lens 211, thereby affecting the normal use of the lens 211. Therefore, a temperature modulation assembly 2111 may be provided at the edge of the lens 211. The temperature modulation assembly 2111 is configured to perform temperature modulation on the lens 211 based on control. The corresponding temperature modulation assembly 2111 is provided at the edge of the lens 211, such that the temperature of the lens 211 is changed through temperature modulation, thereby eliminating the fog on the lens 211 caused by temperature difference and other factors, without manual processing, which effectively optimizes the efficiency and effect of defogging, and enables the optical imaging device 200 to quickly adapt to various environments with temperature difference.

In some embodiments of the present disclosure, the temperature modulation assembly 2111 may be set as a corresponding temperature sensor and a heating belt structure. A plurality of heating resistors may be provided in the heating belt structure. The temperature sensor can detect the ambient temperature and the temperature of the lens. When it is detected that the temperature difference between the temperature of the lens and the ambient temperature is greater than a preset temperature threshold, such as 20°C, the temperature of the lens will be adjusted. For example, when the temperature of the lens 211 is 10°C and the ambient temperature is 35°C, the lens can be heated by the heating belt structure to a temperature close to the ambient temperature, such as 30°C, maintained for a period of time, such as 3 seconds, and then the heating is stopped, thereby eliminating the fog on the lens caused by the temperature difference.

In some embodiments of the present disclosure, the temperature modulation assembly 2111 may be set as a corresponding thermo-electric cooler (TEC) device, which can perform temperature control by thermoelectric effect. The TEC device may be provided with a semiconductor thermoelectric element, which is usually composed of a plurality of N-type and P-type semiconductor pairs (refrigerating pairs). Each refrigerating pairs are connected to each other by conductive electrodes. These refrigerating pairs are combined in series or in parallel to enhance the refrigerating or heating capacity of the TEC. When a direct current passes through a galvanic couple composed of N-type and P-type semiconductor materials, a temperature difference effect is generated at both ends of the galvanic couple. For example, when the current flows from the N-type semiconductor to the P-type semiconductor, heat is absorbed, and the lens 211 can be cooled. Conversely, when the current flows from the P-type semiconductor to the N-type semiconductor, heat is released, and the lens 211 can be heated. The TEC device can be controlled by a pulse width modulation (PWM) controller. The TEC device realizes refrigerating or heating by thermoelectric effect, and its refrigerating or heating capacity is affected by the magnitude and direction of the current. The PWM controller can adjust the output power of the power device by changing the duty cycle of the pulse signal (i.e., the ratio of the pulse width to the period), thereby achieving precise control of the current. When the TEC device is combined with the PWM controller, the PWM controller controls the magnitude and direction of the current passing through the TEC device by adjusting the duty cycle of the pulse signal output to the TEC device according to the preset temperature target value, thereby achieving precise adjustment of the refrigerating or heating capacity of the TEC device and stable control of the temperature of the lens 211.

In some embodiments of the present disclosure, referring to FIG. 5, due to the tolerance that may exist when the motor is controlled, the fourth driving member may cause a corresponding return difference when the lens 211 is driven to move. In order to reduce the error situation of return difference, the lens focusing assembly 213 may also include: an elastic assembly 2131. The elastic assembly 2131 has a first end abutted against and connected to the lens 211 in the direction parallel to the first light transmission path A, and a second end connected to the fourth driving member. The elastic force of the elastic assembly 2131 changes with the stroke movement of the fourth driving member. It should be noted that the elastic force of the elastic assembly 2131 is greater than the gravity of the lens 211, and the elastic assembly 2131 is configured to provide an abutment force for the lens 211. The lens focusing assembly 213 is provided with an elastic assembly 2131 that abuts against the lens 211 in the direction parallel to the first light transmission path A, to limit the movement of the lens 211. Furthermore, in order to further reduce the shaking of the lens 211 due to gravity during movement, the elastic force of the elastic assembly 2131 is greater than the gravity of the lens 211, so as to provide sufficient abutment force for the lens 211, which enables the lens 211 to always be under force, reduces the adverse situations caused by the shaking of the lens 211, and offsets the return difference caused by the lens 211 during position adjustment.

For example, the elastic assembly 2131 may be set as a corresponding spring, disc spring, washer or other elastic functional device.

For example, the fourth driving mechanism is set as a lead screw motor and the fourth driving member is set as a slider, since the motor has a lead screw thread tolerance, there is also a return difference in the sliding stroke positon of the slider. Therefore, the elastic assembly 2131 such as a spring may be added to abut against the lens 211 during the entire stroke, so as to subject the lens 211 to force and make it enable to shake due to its own gravity, thereby offsetting the return difference of the motor. In some embodiments of the present disclosure, the elastic assembly 2131 may be sleeved on the slide rail to abut against the bracket of the lens 211, thereby achieving abutment with the lens 211.

In some embodiments of the present disclosure, referring to FIG. 3, in order to further reduce the volume occupied by the optical path assembly, the optical imaging device 200 may also include: a reflection assembly. The reflection assembly is arranged between the first optical path assembly 210 and the second optical path assembly 220. The first optical path assembly 210 reflects the light to the second optical path assembly 220 for imaging through the reflection assembly. The corresponding reflection assembly is arranged in the two optical path assemblies, so as to achieve the reflection of the light in the two optical path assemblies, such that the first optical path assembly 210 reflects the light to the second optical path assembly 220 for imaging through the reflection assembly. The optical path of the optical path assembly can be divided into multiple parts, and the light of the two optical path assemblies can be combined and processed by the reflection assembly, so as to effectively reduce the overall size and volume of the optical path assembly, thereby reducing the overall device volume, size and weight of the optical imaging device 200, and meeting various miniaturization requirements for the device.

In some embodiments of the present disclosure, the reflection assembly may include a reflective mirror surface 251 and a fixing assembly 252. The reflective mirror surface 251 is fixed in the first optical path assembly 210 or the second optical path assembly 220 through the fixing assembly 252. The fixing assembly 252 includes an elastic fixing structure. The elastic fixing structure can reduce the stress on the reflective mirror surface 251 during installation or movement through its elastic deformation, such that the reflective mirror surface 251 can maintain a stable position and state during the movement, thereby enabling the reflective mirror surface 251 to accurately and stably reflect light into the image sensor 221 located at the imaging center for imaging processing during the movement. The reflection assembly may include a reflective mirror surface 251 for reflecting light and the fixing assembly 252 for fixing the reflective mirror surface 251. One or more reflective mirror surfaces 251 may be provided according to needs, and the reflective mirror surface 251 may be fixed in the first optical path assembly 210 or the second optical path assembly 220 through the fixing assembly 252 to achieve the corresponding light reflection function. Furthermore, the fixing assembly 252 may also be configured as a corresponding elastic fixing structure to reduce the installation stress when fixing the reflective mirror surface 251 and improve the stability and effectiveness of the reflective mirror surface 251 during movement.

For example, in order to reduce the loss during light transmission, a group of reflection assemblies can be provided to reflect light, and the reflective mirror surface 251 may be set as a plane mirror with the reflective function. In order to further increase the optical path distance, multiple groups of reflection assemblies may be provided for optical path folding to shorten the physical size of the optical path assemblies. For example, a roof prism, a Paul prism, and the like may be used as the reflective mirror surface 251.

It should be noted that the angle between the first light transmission path A of the first optical path assembly 210 and the second light transmission path B of the second optical path assembly 220 may be adjusted based on the setting angle and number of the reflection assemblies. For example, in an embodiment shown in FIG. 3, when there is only one group of reflective assemblies, the reflective mirror surface may be disposed at 45-degree angle with respect to both the first light transmission path A and the second light transmission path B, respectively, and an angle of 90 degrees is formed between the first light transmission path A and the second light transmission path B to perform deflect the optical path by 90 degrees, thereby realizing the corresponding light transmission, and providing a longer optical path distance as much as possible while reducing light transmission losses.

It should be noted that the optical imaging device 200 may be provided with a corresponding power module, and the power module may be provided with a detachable battery, such as a lithium-ion battery, to provide the power required for each device to work. In order to realize the corresponding data processing and transmission functions, the optical imaging device 200 may also be provided with a corresponding controller. The controller may be a main control circuit board, the main control circuit board is integrated with various types of functional devices such as a motor control driver, a compass sensor, an image processor, a WIFI/Bluetooth module, and an audio player thereon.

Referring to FIG. 6, FIG. 6 is a schematic flowchart of an optical imaging method according to some embodiments of the present disclosure. The method may include step S310 to step S320.

Step S310, the optical imaging device is controlled by the control device based on the imaging target to move to the target pose.

The optical imaging device is any one of the devices shown in FIG. 1 to FIG. 5. Considering the diversity of imaging targets, the corresponding shooting position varies depending on the imaging targets. Therefore, the control device can control the optical imaging device to move to the target pose for shooting the target according to the current imaging target.

For example, the imaging target may be various types of targets, such as a mission, a building, a specific area, or a corresponding celestial.

Step S320, images are acquired by the optical imaging device at the target pose to obtain the target image.

The optical imaging device is configured to acquire images at the target pose to obtain the desired target image.

It should be noted that the acquired target image may be single-frame image data or video data composed of multiple-frame image data.

In an embodiment shown in FIG. 6, since the overall device volume and size of the optical imaging device are small, it can be applied to various shooting scenarios and shoot for different types of imaging targets, which effectively expands the application scope of the optical imaging method and meets the various shooting requirements of users.

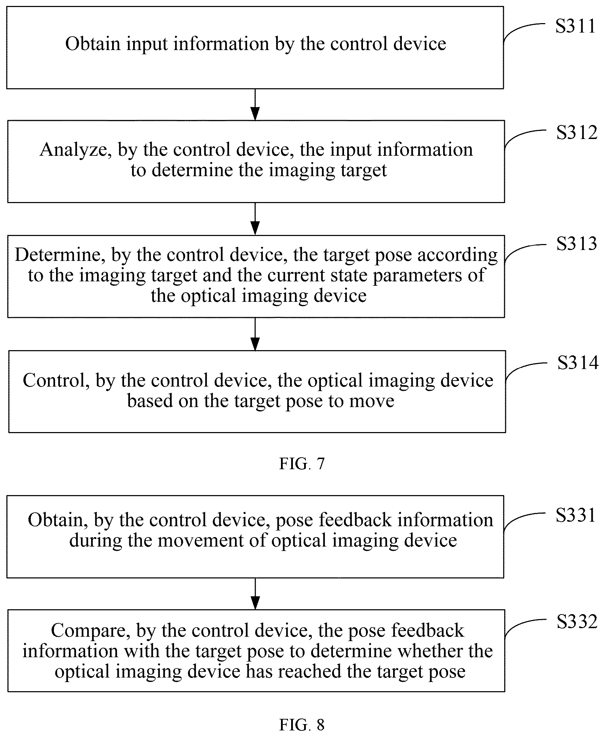

In some embodiments of the present disclosure, referring to FIG. 7, FIG. 7 is a detailed schematic flowchart of a step S310 according to some embodiments of the present disclosure. Step S310 may include sub-step S311 to sub-step S314.

Sub-step S311, input information is obtained by the control device.

The input information input by the user may be various types of information such as text information, speech information, image information, selection information, etc. The control device may obtain the corresponding input information based on the set human-machine interface or network.

Sub-step S312, the input information is analyzed by the control device to determine the imaging target.

The control device can perform various analysis processes such as text recognition, speech recognition, image recognition, option determination, etc. according to the type of input information to determine the imaging target that the user needs to shoot corresponding to the input information.

In some embodiments of the present disclosure, an algorithm such as optical character recognition (OCR) can be used to recognize text in image information. During processing, the image can be pre-processed by graying, binarization, denoising and other operations to extract text features in the image. The extracted text features are usually located using algorithms such as edge detection and connected domain analysis, the located text is segmented using projection method, connected domain analysis and other technologies, and is converted into an editable text format using models such as pattern matching, neural networks, and deep learning. Speech information can also be recognized through acoustic models such as hidden Markov models HMM and deep neural networks DNN. During processing, the collected speech signal can be processed by denoising, echo removal, normalization and other processes to improve signal quality and reduce interference factors such as background noise and echo, making the speech signal clearer, which facilitates subsequent feature extraction and recognition. The denoised speech signal is converted into a series of feature parameters, such as Mel-frequency cepstral coefficients (MFCC), perceptual linear prediction coefficients (PLP), etc., to convert the speech signal from the time domain to the frequency domain or other feature domains, and extract information that can characterize the essential features of the speech, so as to facilitate recognition and processing. Then, the feature parameters are imported into the model and matched with factors such as phonemes and scales to identify basic speech units. Combined with the grammatical rules and vocabulary knowledge of language models, such as N-gram models, recurrent neural networks (RNNs), etc., the recognized speech units are further processed to improve the recognition accuracy. Finally, the matching results of the acoustic models and the language models are decoded into text or other forms of output for easy analysis.

In addition, the recognized text information or input text information can be analyzed using various types of semantic analysis models. During processing, text can be first preprocessed, including: removing noise data in the text, such as HTML tags, special symbols, meaningless characters, etc., to reduce invalid content in the text content. When the text content is Chinese, considering that there is no obvious separator in Chinese, the cleaned continuous text can be divided into independent vocabulary or phrase units, and words that frequently appear in the text but contribute little to its meaning, such as some functional particles or copulas can be removed to reduce the complexity of data processing and improve the accuracy of subsequent analysis. Each word in the text is labeled with its part of speech, such as noun, verb, adjective, etc., to facilitate understanding of the grammatical function and semantic role of the word in the sentence. After completing the preprocessing, semantic analysis can be performed on the preprocessed text, including: analyzing the morphological changes of the prefix, suffix, root, etc. of the word, as well as the synonymy, antonymy and other relationships between words, identifying the syntactic structure of the sentence, such as the subject, predicate, object and other sentence components, as well the grammatical relationship thereof, so as to facilitate understanding the overall structure and meaning of the sentence. On the basis of syntactic analysis, the semantic relationship between various components in the sentence is further annotated, such as agent, recipient, tool, place, and other semantic roles. The words and sentences in the text are represented in the form of a network, with nodes representing words or sentences and edges representing the semantic relationship thereof. The emotional tendency in the text, such as positive, negative or neutral, is identified to understand the emotions and attitudes expressed in the text. Combined with the context, language background, cultural background and other factors of the text, a more comprehensive understanding of the text is achieved. The author's intention or purpose can be identified by analyzing the key words, sentence structure and semantic information in the text. The entities, relationships, and other information in the text can also be extracted and constructed into a knowledge graph to extract relevant user needs from the text and determine corresponding imaging target.

Sub-step S313, the target pose is determined by the control device according to the imaging target and the current state parameters of the optical imaging device.

The state parameters may include angle parameters of the horizontal angle and elevation angle of the optical imaging device in the horizontal axial direction and elevation axial direction of the installation plane, as well as the longitude and latitude parameters corresponding to the angle parameters. The control device can combine the imaging target and the current state parameters of the optical imaging device to determine the corresponding target pose when the optical imaging device is shooting.

It should be noted that the pose of the optical imaging device is determined according to the elevation angle and horizontal angle of the optical imaging device during movement, and the target pose is a specific elevation angle and horizontal angle suitable for shooting the imaging target.

Sub-step S314, the optical imaging device is controlled by the control device based on the target pose to move.

The control device can also control the movement of the optical imaging device according to the target pose, such that the optical imaging device can move to the corresponding target pose for shooting.

In some embodiments of the present disclosure, the control device may control the movement of the optical imaging device by sending instructions. The sent control instructions may include a specific elevation angle and a horizontal angle corresponding to the target pose.

In an embodiment shown in FIG. 7, the suitable target pose for shooting can be determined according to the actual needs of the user and the current actual state of the optical imaging device, and the pose of the optical imaging device can be changed by controlling the movement of the optical imaging device, so as to achieve the function of automatically finding the target for shooting, which effectively improves the efficiency and effectiveness of shooting.

In some embodiments of the present disclosure, referring to FIG. 8, FIG. 8 is a schematic flowchart of a further optical imaging method according to some embodiments of the present disclosure. The method may further include step S331 to step S332.

Step S331, pose feedback information during the movement of optical imaging device is obtained by the control device.

The control device can obtain the current pose feedback information of the optical imaging device in real-time during the movement. The pose feedback information may be the elevation angle and horizontal angle data collected by the angle sensor provided in the optical imaging device.

In some embodiments of the present disclosure, the angle sensor can be a sensor provided in the horizontal transmission structure and the elevation transmission structure, which can determine the current elevation angle and horizontal angle as the corresponding pose feedback information according to the degree of rotation of the horizontal transmission structure and the elevation transmission structure, such as the torque magnitude of the torque motor, the rotation angle of the worm gear, etc.

Step S332, the control device compares the pose feedback information with the target pose to determine whether the optical imaging device has reached the target pose.

The pose feedback information can be compared with the target pose to determine whether the optical imaging device has reached the corresponding target pose. If the pose feedback information is consistent with the target pose, it indicates that the optical imaging device has reached the target pose and image acquisition can be performed. If the pose feedback information is inconsistent with the target pose, it indicates that the optical imaging device has not reached the target pose.

In an embodiment shown in FIG. 8, the current position of the optical imaging device can be determined in real-time during the movement, which effectively improves the effectiveness and accuracy of the movement control.

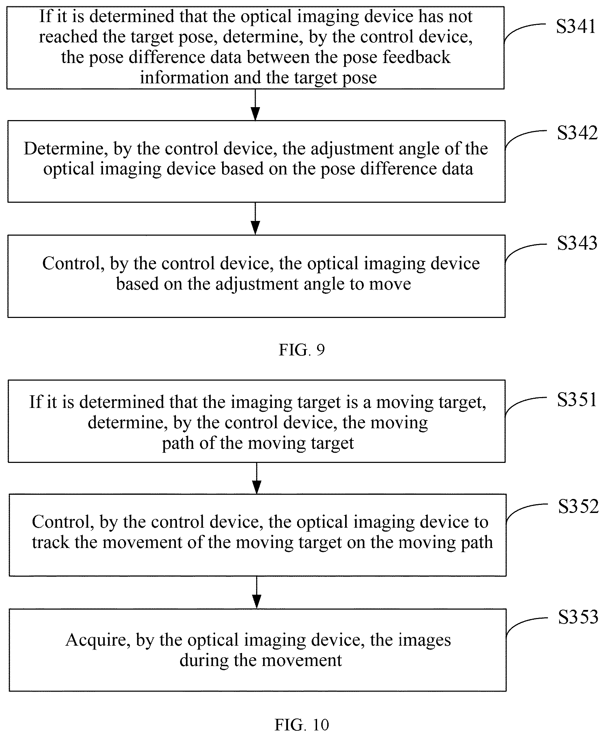

In some embodiments of the present disclosure, referring to FIG. 9, FIG. 9 is a schematic flowchart of a further optical imaging method according to some embodiments of the present disclosure. The method may further include step S341 to step S343.

Step S341, if it is determined that the optical imaging device has not reached the target pose, the pose difference data between the pose feedback information and the target pose is determined by the control device.

If it is determined that the optical imaging device has not reached the target pose, the control device determines the pose difference data between the two according to the current pose feedback information and the target pose. The pose difference data is the angle difference data between the two sets of horizontal angles and elevation angles.

For example, the target pose is 90 degrees to the left and 40 degrees upward. The pose feedback information indicates that the optical imaging device has rotated 60 degrees to the left and 20 degrees upward. The corresponding pose difference data includes: horizontal angle difference: 90 degrees - 60 degrees = 30 degrees; and elevation angle difference: 40 degrees - 20 degrees = 20 degrees.

Step S342, the adjustment angle of the optical imaging device is determined by the control device based on the pose difference data.

Step S343, the optical imaging device is controlled by the control device based on the adjustment angle to move.

The adjustment angle for continuing the movement control of the optical imaging device can be determined based on the pose difference data, so as to continue to control the movement of the optical imaging device until it can reach the target pose.

In some embodiments of the present disclosure, the adjustment angle may include an adjustment direction and rotation angle data, such as continuing to rotate 20 degrees to the left, or continuing to lift up 20 degrees, etc.

In an embodiment shown in FIG. 9, when the optical imaging device has not reached the target pose, the movement \of the optical imaging device can be controlled in real-time according to the actual difference between the real-time position of the optical imaging device and the target pose, which effectively improves the effectiveness and accuracy of the movement control.

In some embodiments of the present disclosure, referring to FIG. 10, FIG. 10 is a schematic flowchart of a further optical imaging method according to some embodiments of the present disclosure. The method may further include step S351 to step S353.

Step S351, if it is determined that the imaging target is a moving target, the moving path of the moving target is determined by the control device.

Taking into account the movement characteristics of the imaging target, when it is determined that the imaging target is a corresponding mobile target, such as a moving celestial, person, vehicle, etc., the moving path of the mobile target can be determined by the control device. For example, when the mobile target is a celestial, the moving path of the celestial target can be determined from the celestial database according to identity information such as the name of the celestial target.

Step S352, the optical imaging device is controlled by the control device to track the movement of the moving target on the moving path.

Step S353, the images is acquired by the optical imaging device during the movement.

Multiple target poses of the optical imaging device can be determined according to the moving path, so as to control the optical imaging device to move to multiple target poses, respectively, thereby controlling the optical imaging device to track the movement of the moving target on the moving path and performing image acquisition during the movement.

It should be noted that when the optical imaging device moves to each target pose, the starting point of the movement is the previous target pose to achieve a continuous movement process. The method of determining whether the target pose has been reached and the pose adjustment method when it has not been reached are similar to the technical solutions according to the embodiments shown in FIG. 8 and FIG. 9, which will not be elaborated in the present disclosure.

In an embodiment shown in FIG. 10, the target can be automatically found and tracked according to the movement characteristics of the imaging target, and mobile shooting can be achieved during the tracking process, which effectively improves the success rate and integrity of image acquisition of the target.

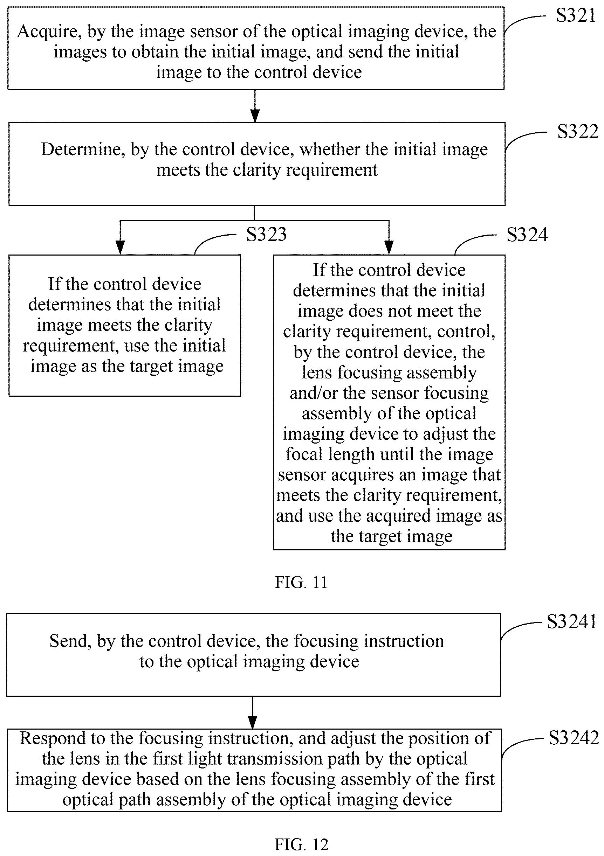

In some embodiments of the present disclosure, referring to FIG. 11, FIG. 11 is a detailed schematic flowchart of a step S320 according to some embodiments of the present disclosure. Step S320 may include sub-step S321 to sub-step S324.

Sub-step S321, the images is acquired by the image sensor of the optical imaging device to obtain the initial image, and the initial image is sent to the control device.

After the optical imaging device reaches the target pose, the image sensor provided therein can perform image acquisition to obtain the initial image. The acquired initial image may be single-frame image data or video data composed of multiple-frame image data.

Sub-step S322, the control device is used to determine whether the initial image meets the clarity requirement.

In order to improve the quality of the image finally obtained, the control device may analyze the clarity of the initial image and make a judgment based on the preset clarity requirement to determine whether the initial image meets the clarity requirement.

In some embodiments of the present disclosure, the preset clarity requirement can be determined according to the needs of the user and the type of image sensor, etc. The clarity requirement includes corresponding parameters for multiple evaluation conditions such as resolution, sharpness, and edge intensity. Resolution is one of the important indicators for measuring the clarity of an image. The higher the resolution is, the richer the detail information in the image is, and the clearer the image appears. Sharpness reflects the sharpness of the edge of the image, and a high sharpness image has clear edges and rich details. The edge is a fundamental feature in the image. If the contrast is high at the edge, the grayscale gradient changes significantly. A clear image should contain rich details and clear contour edges. Accordingly, when analyzing the initial image, it can also be analyzed from multiple perspectives of resolution, sharpness, and edge intensity. For example, the clarity of the image can be evaluated by calculating the change in the edge or details in the image. According to differences in image details and edge information, the in-focus image has more obvious detail changes, sharper edges, and a larger grayscale value change than the out-of-focus image. The clarity of the image can also be evaluated by analyzing the high-frequency components in the frequency domain, and the image can be subjected to a two-dimensional discrete Fourier transform and converted to the corresponding frequency domain. In the frequency domain, the high-frequency part determines the edge detail information of the image, and the low-frequency part determines the contrast information. When performing clarity analysis, various algorithms may be used for processing, for example, Brenner gradient method: calculating the grayscale difference between two pixels that differ by two units, and evaluating the clarity of the image through the change in grayscale difference; Tenegrad gradient method: using the Sobel operator to extract the gradients in the horizontal and vertical directions, respectively, and evaluating the clarity of the image by computing the gradient magnitude; Laplace gradient method: using the Laplace operator instead of the Sobel operator for gradient computation, and also evaluating the clarity of the image based on the gradient magnitude; variance method: evaluating the clarity by calculating the grayscale variance of the image due to a clearly focused image with a greater grayscale difference than a blurred image; energy gradient method: taking into account the grayscale changes of adjacent pixels in the image, and evaluating the clarity of the image by computing the energy gradient. This method is suitable for real-time evaluation of the clarity of the image.

Sub-step S323, if the control device determines that the initial image meets the clarity requirement, the initial image is used as the target image.

When the initial image meets the clarity requirement, it indicates that the initial image is relatively clear, and the initial image can be directly used as the corresponding target image.

Sub-step S324, if the control device determines that the initial image does not meet the clarity requirement, the control device controls the lens focusing assembly and/or the sensor focusing assembly of the optical imaging device to adjust the focal length, until the image sensor acquires an image that meets the clarity requirement, and the acquired image is used as the target image.

When the initial image does not meet the clarity requirement, it indicates that the initial image may be blurred. The control device can send a focusing instruction to the optical imaging device to control the lens focusing assembly of the optical imaging device to adjust the position of the lens, and/or control the sensor focusing assembly to adjust the position of the image sensor to adjust the focal length and re-acquire the image, until the image sensor acquires an image that meets the clarity requirement, and the acquired image is used as the final target image.

In some embodiments of the present disclosure, during focusing processing, the position of the lens or image sensor of the optical imaging device can be adjusted through various methods such as point traversal and focusing mode conversion, and the target image with higher clarity can be obtained.

In an embodiment shown in FIG. 11, the clarity of the image acquired by the optical imaging device can be analyzed, and focus control processing can be performed when the clarity is low, thereby improving the quality of the target image obtained.

In some embodiments of the present disclosure, referring to FIG. 12, FIG. 12 is a detailed schematic flowchart of a sub-step S324 according to some embodiments of the present disclosure. Sub-step S324 may include sub-sub-step S3241 to sub-sub-step S3242.

Sub-sub-step S3241, the focusing instruction is sent to the optical imaging device by the control device.

The control device may send the focusing instruction to the optical imaging device to focus the lens.

Sub- sub-step S3242, the optical imaging device responds to the focusing instruction, and adjusts the position of the lens in the first light transmission path based on the lens focusing assembly of the first optical path assembly of the optical imaging device.

The position of the lens in the first light transmission path can be adjusted by the lens focusing assembly of the first optical path assembly provided in the optical imaging device, such that the lens is adjusted to a suitable focusing position in the first light transmission path for light transmission, so as to effectively improve the imaging quality, which is suitable for various image acquisition scenarios.

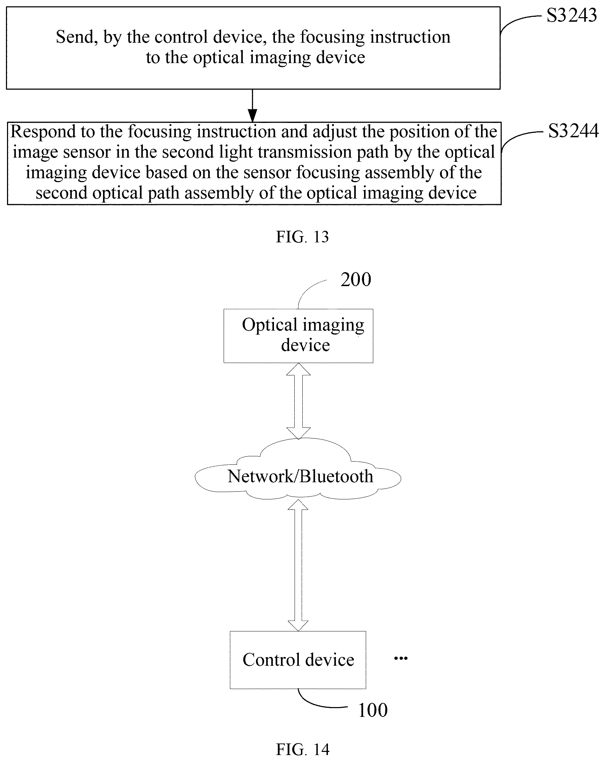

In some embodiments of the present disclosure, referring to FIG. 13, FIG. 13 is a detailed schematic flowchart of a further sub-step S324 according to some embodiments of the present disclosure. Sub-step S324 may include sub- sub-step S3243 to sub-sub-step S3244.

Sub- sub-step S3243, the focusing instruction is sent to the optical imaging device by the control device.

The control device may send the focusing instruction to the optical imaging device for focusing the image sensor.

Sub-sub-step S3244, the optical imaging device responds to the focusing instruction and adjusts the position of the image sensor in the second light transmission path based on the sensor focusing assembly of the second optical path assembly of the optical imaging device.

The position of the image sensor in the second light transmission path can be adjusted by the sensor focusing assembly of the second optical path assembly provided in the optical imaging device, such that the image sensor is adjusted to a suitable focusing position in the second light transmission path for light receiving and imaging processing, so as to effectively improves the imaging quality, which is suitable for various different image acquisition scenarios.

In some embodiments of the present disclosure, according to actual situations, one of the lens focusing assembly and a sensor condition assembly can be selected for control to achieve the focal length adjustment function, or the two focusing assemblies can be controlled separately in sequence to perform focusing processing.

It should be noted that, the optical imaging device drives the second optical path assembly inside the transmission structure and the first optical path assembly connected to the transmission structure to move through the transmission structure. During the movement of the transmission structure, the second optical path assembly remains stationary relative to the first optical path assembly. The optical imaging device moves through the transmission structure provided therein. When the transmission structure moves, it can drive the second optical path assembly provided inside the transmission structure and the first optical path assembly connected to the outside of the transmission assembly to move synchronously. During the movement of the transmission structure, the second optical path assembly can remain stationary relative to the first optical path assembly, such that the relative stationary relationship between the optical path assemblies and the image/imaging sensor is not affected during the movement, and the optical imaging device can achieve stable optical imaging function.

In some embodiments of the present disclosure, referring to FIG. 14, FIG. 14 is an operating structural schematic diagram of an optical imaging system according to some embodiments of the present disclosure. The optical imaging system includes the control device 100 and the optical imaging device 200 according to any one of the above embodiments.

The control device 100 is communicatively connected to the optical imaging device 200 through a network, Bluetooth, wires, etc.

The control device 100 is configured to control the optical imaging device to move to a target position based on an imaging target.

The optical imaging device 200 is configured to acquire images at the target position to obtain the target image.

In an embodiment shown in FIG. 14, the control device is communicatively connected to the optical imaging device in the system to realize corresponding data transmission and control functions. The control device controls the optical imaging device to move to the target pose for shooting the target according to the current imaging target, such that the optical imaging device acquires the image at the target pose to obtain the desired target image.

Since the principle of solving the problem by the system according to an embodiment of the present disclosure is similar to that according to the above embodiments of the optical imaging device, the implementation of the system according to the embodiment can refer to the description in the above embodiments of the optical imaging device, of which the repeated parts will not be elaborated in the present disclosure.

In several embodiments provided by the present disclosure, it should be understood that the disclosed device can also be implemented in other ways. The embodiments of the system described above are merely illustrative. For example, the block diagrams in the drawings show the possible architecture, functions and operations of the devices according to the multiple embodiments of the present disclosure. In this regard, each box in the block diagram can represent a module, a program segment or a part of a code, and the module, the program segment or the part of the code contains one or more executable instructions for implementing the specified logical function. It should also be noted that in some alternative implementations, the functions marked in the box can also occur in a different order from the order marked in the drawings. For example, two consecutive boxes can actually be executed substantially in parallel, and they can sometimes be executed in the opposite order, depending on the functions involved. It should also be noted that each box in the block diagram, as well as the combination of the block diagrams, can be implemented with a dedicated hardware-based system that performs a specified function or action, or can be implemented with a combination of dedicated hardware and computer instructions.

In addition, the functional modules in the embodiments of the present disclosure may be integrated together to form an independent part, or each module may exist separately, or two or more modules may be integrated to form an independent part.

If the functions are implemented in the form of software function modules and sold or used as independent products, they can be stored in a computer-readable storage medium. Based on this understanding, the technical solutions of the present disclosure, or the part that contributes to the prior art or the part of the technical solution, can be embodied in the form of a software product. The computer software product is stored in a storage medium, including several instructions to enable a computer device (which may be a personal computer, server, or network device, etc.) to execute all or part of the steps of the method described in each embodiment of the present disclosure. The above storage medium includes various medium that can store program codes, such as U disk, mobile hard disk, read-only memory (ROM), random access memory (RAM), disk or optical disk, etc.

The above contents are just embodiments of the present disclosure, and are not intended to limit the protection scope of the present disclosure. For those skilled in the art, the present disclosure may have various changes and variations. Any modifications, equivalent substitutions, improvements, etc. made within the spirit and principles of the present disclosure shall fall within the protection scope of the present disclosure. It should be noted that similar reference numerals and letters represent similar items in the drawings. Therefore, once an item is defined in a drawing, it does not need to be further defined and explained in the subsequent drawings.

The above contents are just embodiments of the present disclosure, but the protection scope of the present disclosure is not limited thereto. Within the technical scope disclosed in the present disclosure, any changes or substitutions that can be easily envisaged by those skilled in the art should be included in the protection scope of the present disclosure.

It should be noted that, in the present disclosure, relational terms such as first and second, etc. are only used to distinguish one entity or operation from another entity or operation, and do not necessarily require or imply any such actual relationship or order between these entities or operations. Moreover, the terms "include", "comprise" or any other variations thereof are intended to cover non-exclusive inclusion, such that a process, a method, an item or a device including a series of elements includes not only those elements, but also other elements that are not explicitly listed, or further includes elements inherent to such a process, a method, an item or a device. Without further limitations, the elements defined by the statement "include/comprise..." do not exclude the existence of other identical elements in the process, method, item or device including said elements.

## Claims

1. An optical imaging device, comprising a first optical path assembly, a second optical path assembly and a transmission structure;
wherein the first optical path assembly is fixedly connected to the transmission structure and is configured to move under driven of the transmission structure;
wherein the second optical path assembly is arranged inside the transmission structure and is configured to move under driven of the transmission structure;
wherein the first optical path assembly and the second optical path assembly are in optical path communication with each other; and a first optical transmission path of the first optical path assembly and a second optical transmission path of the second optical path assembly form an angle; and
wherein the second optical path assembly remains stationary relative to the first optical path assembly during movement of the transmission structure.

2. The optical imaging device according to claim 1, wherein the transmission structure comprises: a horizontal transmission structure and an elevation transmission structure;
the horizontal transmission structure is connected to the elevation transmission structure;
the first optical path assembly is fixed to a connection area of the elevation transmission structure, and the second optical path assembly is arranged in a hollow cavity corresponding to the connection area inside the elevation transmission structure;
the horizontal transmission structure is configured to drive the first optical path assembly and the second optical path assembly to move in a horizontal axial direction parallel to an installation plane of the optical imaging device; and
the elevation transmission structure is configured to drive the first optical path assembly and the second optical path assembly to move in an elevation axial direction of which an angle relative to the installation plane changes.

3. The optical imaging device according to claim 2, wherein an inner wall of a housing of the elevation transmission structure encloses to form the hollow cavity, and the hollow cavity is configured to transmit light refracted by the first optical path assembly to accommodate the second light transmission path of the second optical path assembly;
the second optical path assembly comprises: an image sensor;
the image sensor is arranged at an end of the hollow cavity away from the connection area; and
the image sensor is configured to receive light and perform imaging processing to obtain a target image.

4. The optical imaging device according to claim 3, wherein the second optical path assembly further comprises: a sensor focusing assembly;
the sensor focusing assembly is arranged at an end of the image sensor away from the first optical path assembly; and
the sensor focusing assembly is configured to adjust a position of the image sensor in the second light transmission path.

5. The optical imaging device according to claim 2, wherein the elevation transmission structure comprises: a driving mechanism and a driving member;
the driving mechanism is connected to the driving member;
the driving mechanism is configured to provide a driving force in the elevation axial direction to the driving member;
the driving member is configured to drive the first optical path assembly and the second optical path assembly to move in the elevation axial direction based on the driving force;
the driving member comprises a first hollow structure; and
an inner wall of a housing of the first hollow structure encloses to form a partial hollow cavity.

6. The optical imaging device according to claim 5, wherein the elevation transmission structure further comprises: an elevation central shaft;
the driving member is connected to the elevation central shaft, and the driving member drives the first optical path assembly and the second optical path assembly to move along an axial rotation direction of the elevation central shaft;
the elevation central shaft and the first optical path assembly are connected to each other via a cavity center shaft; and
the elevation central shaft is connected to the cavity center shaft, and the elevation central shaft and the cavity center shaft are coaxial.

7. The optical imaging device according to claim 6, wherein the elevation central shaft is configured as a second hollow structure, and an inner wall of a housing of the second hollow structure encloses to form a partial hollow cavity; and
the cavity center shaft is configured as a third hollow structure, and an inner wall of a hosing of the third hollow structure encloses to form a partial hollow cavity.

8. The optical imaging device according to any one of claims 1 to 7, wherein the first optical path assembly comprises: a lens, a lens barrel housing and a lens focusing assembly;
the lens is arranged inside the lens barrel housing or at an end of the lens barrel housing;
the lens barrel housing is fixed on the transmission structure;
the lens is configured to transmit light;
the lens focusing assembly is sleeved between the lens and the lens barrel housing; and
the lens focusing assembly is configured to adjust a position of the lens in the first light transmission path of the first optical path assembly.

9. An optical imaging method, comprising:
controlling, by a control device, the optical imaging device according to any one of claims 1 to 8 to move to a target pose based on an imaging target; and
acquiring, by the optical imaging device, an image at the target pose to obtain a target image.

10. The optical imaging method according to claim 9, wherein said acquiring, by the optical imaging device, the image at the target pose to obtain the target image comprises:
acquiring, by an image sensor of the optical imaging device, the image to obtain an initial image, and sending the initial image to the control device;
determining, by the control device, whether an initial image meets a clarity requirement;
taking the initial image as the target image when the control device determines that the initial image meets the clarity requirement; and
controlling, by the control device, a lens focusing assembly and/or a sensor focusing assembly of the optical imaging device to adjust a focal length when the control device determines that the initial image does not meet the clarity requirement, until the image sensor acquires an image that meets the clarity requirement, and obtaining the acquired image as the target image.
